# EUROPÄISCHE PATENTSCHRIFT

(11) **EP 0 602 373 B1**
(45) Veröffentlichungstag und Bekanntmachung des Hinweises auf die Patenterteilung: **08.10.1997**
(21) Anmeldenummer: 93117885.9
(22) Anmeldetag: 04.11.1993
(51) Int. Cl.: F16L 59/02, F25D 23/06

(54) **Wärmeisolierende Wand**
Thermally insulated wall
Paroi calorifugée

(30) Priorität: 17.12.1992 DE 4242777
(43) Veröffentlichungstag der Anmeldung: 22.06.1994
(73) Patentinhaber: Bosch-Siemens Hausgeräte GmbH, 81669 München (DE)
(72) Erfinder: Bundesmann, Helmut, D-89537 Giengen (DE); Schmid, Werner, D-86720 Nördlingen (DE)

(56) Entgegenhaltungen:
- DE-A- 2 824 906
- FR-A- 1 573 730
- GB-A- 2 259 026
- US-A- 5 103 528

## Beschreibung

Die Erfindung betrifft eine wärmeisolierende Wand, insb. aus einzelnen übereinander angeordneten Schichten aufgebaute Wand, deren zur Wärmeisolation beitragende Schicht zwischen außenliegenden, einen Innenraum umschließenden Deckschichten angeordnet und in Form von flüssigen Ausgangskomponenten über eine Öffnung in den Innenraum einbringbar ist, wobei die von der Wärmeisolation verdrängte Luft über wenigstens eine Austrittsöffnung entweichen kann, die mit den Austritt des Wärmeisolationsmaterials verhindernden Mitteln ausgestattet ist.

Bei Kühl- und Gefriergeräten ist es bekannt, den mit Wärmeisolation in Form von flüssigen Ausgangskomponenten zu befüllenden Innenraum von deren Gehäuse und deren Türen über in den Wandungen von diesen angeordneten Durchbrüchen zu entlüften, so daß eine vollständige Füllung der Innenräume mit Wärmeisolation stattfinden kann. Um zu verhindern, daß die Wärmeisolation an den Durchbrüchen austritt, ist bereits vorgeschlagen worden, die Durchbrüche auf ihrer der Wärmeisolation zugewandten Seite mit einem filterartigen Membran abzudecken, deren Maschenweite so ausgelegt ist, daß die durch das Einbringen der Wärmeisoltion verdrängte Luft über diese Membran entweichen kann, aber der Schaum zurückgehalten wird. Derartige Membranen müssen in zeitaufwendiger und somit kostenintensiver Handarbeit an den Durchbrüchen angeordnet werden.

Aus dem ES-GM 91 00 814 ist ein Verstärkungsstück bekannt, das an den Ecken des von einer Außen- und einer Innenverkleidung gebildeten Innenraums einer Kühlschranktür eingesetzt ist. Dieses Verstärkungsstück hat einerseits die Aufgabe, den Anschlagwechsel der Kühlschranktür wesentlich zu vereinfachen, wobei es zu diesem Zweck mit zwei, das Einsetzen einer Türscharnierlagerbuchse erlaubenden, sacklochartigen Aufnahmen ausgestattet ist, an denen jeweils nur eine, je nach Türanschlag mit der Türscharnierlagerbuchse beaufschlagt ist, während die andere frei bleibt. An der Außenseite der die Aufnahme begrenzenden Wandung sind die Aufnahmen auf ihrer vom Schaum abgewandten Seite, über ihre Höhe mit einem Kanal ausgestattet, der nahe dem Boden der sacklochartigen Aufnahme über einen die Wandstärke der Aufnahme durchsetzenden Durchbruch mit den Aufnahmen strömungstechnisch verbunden sind. Die beiden Kanäle sind auf der dem Boden der Aufnahmen gegenüberliegenden Seite über einen sich beim Einbau des Verstärkungsstückes sich ergebenden Querkanal miteinander strömungstechnisch verbunden.

Vor dem Einschäumen in den Innenraum wird der Boden derjenigen Aufnahme, die nicht mit der Türscharnierlagerbuchse beaufschlagt ist, durchstoßen, so daß die während des Ausschäumens des Innenraumes der Tür verdrängte Luft über den durchstoßenen Boden der Aufnahme und über den Durchbruch in den auf der Außenseite der Aufnahme angeordneten Kanal einströmen kann und von dort über den Querkanal, den Kanal der anderen Aufnahme und über deren Durchbruch, der Türscharnierlagerbuchse zugeführt wird und über diese aufgrund einer am Buchsenboden angeordneten Öffnung aus dem Innenraum der Tür nach außen entweichen kann. Der ebenfalls in diesen Luftweg einströmende Schaum soll dabei von solcher Konsistenz sein, daß er innerhalb des labyrinthartig angelegten Luftweges zum Stillstand kommt.

Eine Türlagerbuchse mit labyrinthartig angelegter Strömungskanäler ist außerdem bereits aus der US-A- 5 103 528 bekannt.

Neben dem kompliziert aufgebauten und platzintensiven Entlüftungssystem, innerhalb dem auch der einströmende Schaum zum Stillstand kommt, haftet dieser Lösung noch der Nachteil an, daß es keine Kontrollmöglichkeit gibt, anhand der sich feststellen läßt, ob eine vollständige Füllung des Innenraumes mit Wärmeisolation auch tatsächlich stattgefunden hat.

Der Erfindung liegt die Aufgabe zugrunde, eine Entlüftung für die durch das Ausschäumen eines Innenraumes einer Wand mit Wärmeisolationsmaterial aus dem Innenraum verdrängte Luft zu schaffen, die konstruktiv einfach aufgebaut ist und bei der die Nachteile des Standes der Technik vermieden sind.

Diese Aufgabe wird gemäß der Erfindung durch die Merkmale des Anspruchs 1 gelöst.

Die erfindungsgemäße Lösung zeichnet sich einerseits dadurch aus, daß deren platzsparender Aufbau vernachläßigbare Fehlstellen in der Wärmeisolation verursacht, sodaß Wärmebrücken vermieden sind. Andererseits läßt sich eine derartige Lösung, beispielsweise durch spanlose Einformung eines solchen Kanals in einer der Deckschichten der Wand leicht automatisieren, wodurch kostenintensive Fertigungsarbeiten vermieden werden. Darüberhinaus weist eine solche Lösung noch den Vorzug auf, daß durch das im Kanal zum Stillstand gebrachte Isolationsmaterial die vollständige Füllung des Innenraumes angezeigt ist. Ferner werden stauträchtige Strömungsrichtungsumkehrungen für ein im Kanal strömendes Medium vermieden.

Nach einer weiteren bevorzugten Ausführungsform des Gegenstandes der Erfindung ist vorgesehen, daß der den Luftdurchlaß erlaubende Querschnitt sich aus einer Mehrzahl von Einzelquerschnitten von strömungstechnisch voneinander getrennten Teilkanälen zusammensetzt.

Der Vorteil einer solchen Lösung liegt darin, daß auf einfache Weise bei gleichbleibendem Luftdurchlaßquerschnitt, sich die Kanallänge aufgrund des durch den verringerten Kanalquerschnitt der Teilkanäle sich ergebende Erhöhung des Strömungswiderstandes deutlich reduziert.

Besonders einfach und kostengünstig herzustellen sind die Teilkanäle, wenn nach einer weiteren vorteilhaften Ausbildungsform des Gegenstandes der Erfindung vorgesehen ist, daß die Teilkanäle als Durchgangsbohrungen gleichen Querschnitts ausgebildet sind.

Besonders sicher zum Stillstand gebracht wird das in den Kanal oder die Teilkanäle einströmende Material, nach wenn nach einer bevorzugten Ausführungsform des Gegenstandes der Erfindung vorgesehen ist, daß die Länge der Kanäle zumindest das Zehnfache ihres hydraulischen Ersatzdurchmessers beträgt.

Die Erfindung ist in der nachfolgenden Beschreibung anhand eines in der beigefügten Zeichnung vereinfacht dargestellten Haushalts-Kühlschrankes erläutert. Es zeigen:
- Fig. 1: in raumbildlicher Darstellung von vorne ein Haushalts-Kühlgerät mit geschlossener Tür, deren dem Boden und der Decke des Kühlgeräts zugewandte Stirnseiten mit Rahmenleisten eingefaßt sind, wobei die obenliegende mit einer Handhabe zum Öffnen der Tür ausgestattet ist,
- Fig. 2: ausschnittsweise in etwa in natürlichem Maßstab, die Tür in Bereich der obenliegenden Rahmenleiste, gemäß der Schnittlinie II-II,
- Fig. 3: die obenliegende Rahmenleiste der Tür in Schrägansicht auf ihre der Stirnseite der Tür zugewandte, in Einbaulage nicht sichtbare Unterseite, mit im Bereich ihrer Schmalseiten angeordneten Türlagerbuchsen und sich daran anschließenden, zu den Stirnseiten der Tür hin gerichteten Entlüftungen und
- Fig. 4: in einem vergrößerten Ausschnitt aufgebrochen dargestellt, die obenliegende Rahmenleiste im Bereich der Türlagerbuchsen und der sich daran anschließenden Entlüftung in Schrägansicht auf die mit der Handhabe ausgestattete Längsseite der Rahmenleiste.

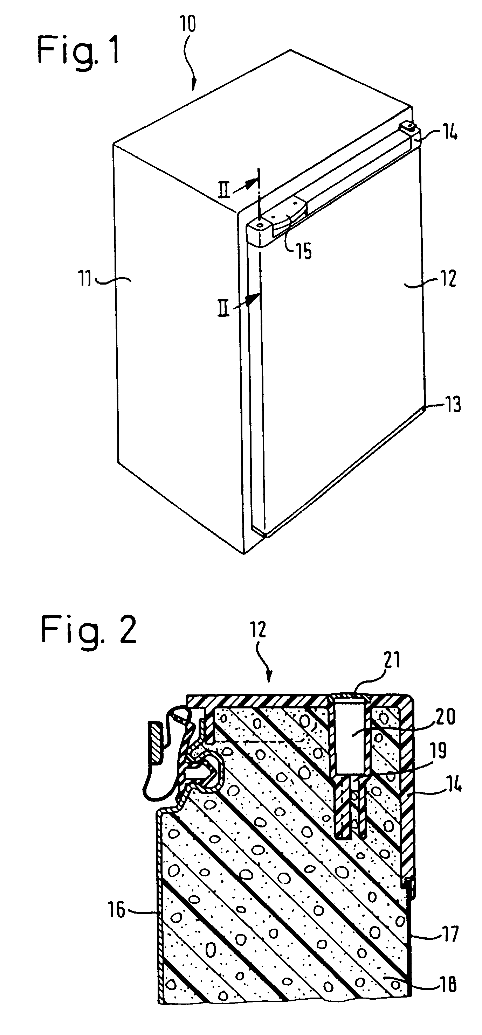

Gemäß Fig. 1 ist ein Haushalts-Kühlgerät 10 mit einem wärmeisolierten Gehäuse 11 dargestellt, dessen Öffnung mit einer am Öffnungsrand angeschlagenen Tür 12 verschließbar ist. Die dem Boden und der Decke des Gehäuses 11 zugeordneten Stirnseiten der Tür 12 sind mit Rahmenleisten 13 und 14 eingefaßt, wobei die dem Boden des Gehäuses 11 zugewandte Rahmenleiste mit 13 bezeichnet ist, während die höherliegende, der Decke des Gehäuses 11 zugeordnete Rahmenleiste mit dem Bezugszeichen 14 versehen ist. An der höherliegenden Rahmenleiste 14 ist auf ihrer parallel zur Oberfläche der Decke verlaufenden Außenseite eine zum Öffnen der Tür 12 dienende, mit nicht näher dargestellten Befestigungsmitteln befestigte Handhabe 15 vorgesehen, die auf der von der Anschlagseite der Tür 12 abgewandten Seite der Rahmenleiste 14 angeordnet ist.

Wie insb. aus Fig. 2 ersichtlich ist, ist die Tür 12 aus einzelnen übereinander angeordneten Schichten aufgebaut, von denen die außenliegenden als Deckschichten dienen, wobei eine der Deckschichten als Innenverkleidung 16 und die andere als Außenverkleidung 17 ausgebildet ist. Zwischen diesen Deckschichten ist eine Schicht aus Polyurethanschaum angeordnet, das als Wärmeisolationsmaterial 18 dient. Dieses ist in Form von flüssigen Ausgangskomponenten in den einerseits durch die Innenverkleidung 16 und die Außenverkleidung 17 und andererseits durch die auf deren Stirnseiten aufgesetzten Rahmenleisten 13 und 14 gebildeten Innenraum über eine nicht gezeigte Öffnung eingebracht, wodurch sich aufgrund der Benetzung des als Wärmeisolation dienenden Schaumes mit den Verkleidungen und den Rahmenleisten ein stabiler Türkorpus ergibt.

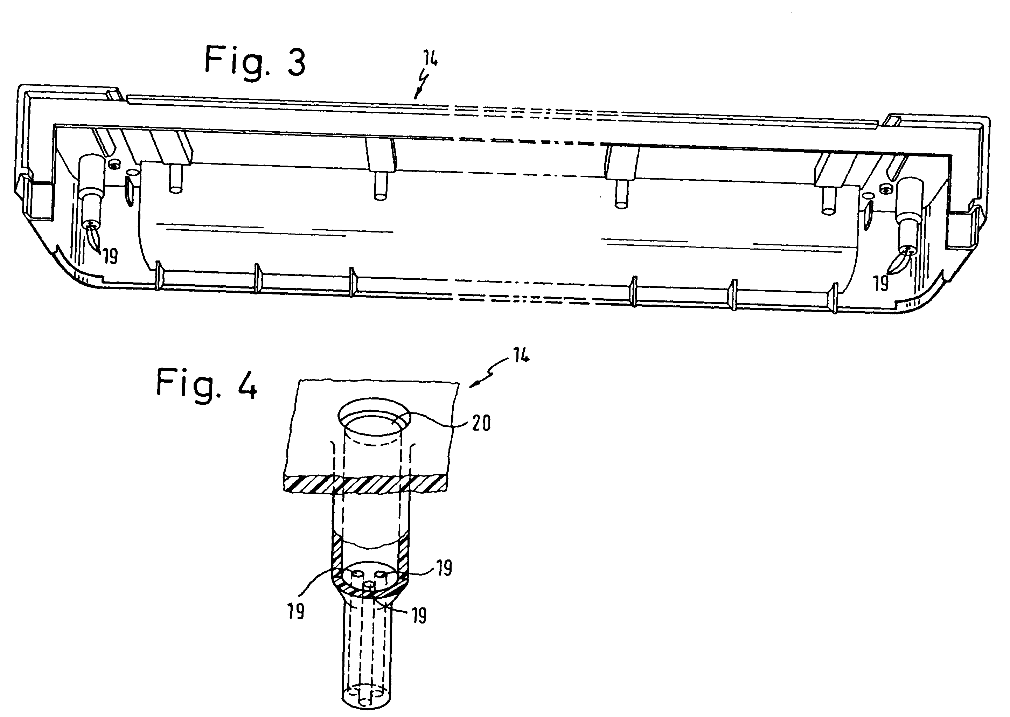

Das Wärmeisolationsmaterial 18 wird beim Einbringen in den Innenraum mit Druck beaufschlagt, wodurch infolge des in Strömung versetzten Wärmeisolationsmaterials 18 ein vollständiges Ausschäumen des gesamten Innenraumes erzielt wird. Die aus dem Innenraum durch sein Ausschäumen mit Wärmeisolationsmaterial 18 verdrängte Luft entweicht über als Austrittsöffnungen dienende, in einen geraden Kreiszylinder als Durchgangsbohrungen mit gleichbleibenden kreisförmigem Querschnitt ausgeführte und durch deren Bohrungswandungen strömungstechnisch voneinander getrennte parallel zueinander verlaufende Teilkanäle 19, deren hydraulischer Durchmesser höchstens den zehnten Teil ihrer Kanallänge beträgt. Der mit den Teilkanälen 19 ausgestattete Kreiszylinder schließt unmittelbar an in den Innenraum der Tür 12 ragenden, senkrecht an den mit der Handhabe 15 versehenen Schenkel der Rahmenleiste 14 mitangeformten, kreiszylindrischen Türlagerbuchsen 20 an, die an beiden Schmalseiten der Rahmenleiste 14 für den Fall eines evtl. erforderlich werdenden Türanschlagwechsels vorgesehen sind (siehe hierzu Fig. 3 und Fig. 4). Die Türlagerbuchsen 20 sind zu der Außenseite der Rahmenleiste 14 hin, an der die Handhabe 15 befestigt ist, mit einer Öffnung ausgestattet, über die die verdrängte Luft in die Außenatmosphäre einströmt und die nach Beendigung des Ausschäumvorganges mit einem bündig mit der Außenseite der Rahmenleiste 14 abschließenden Stopfen 21 verschlossen ist (siehe Fig. 2).

Das die Luft aus dem Innenraum der Tür 12 verdrängende Wärmeisolationsmaterial 18 strömt nahezu am Ende des Ausschäumvorganges in die Teilkanäle 19 ein, wobei durch deren Durchmesser und deren Länge ein Strömungswiderstand erzeugt ist, der der Strömung des Wärmeisolationsmaterials 18 entgegenwirkt, so daß dieses innerhalb der Kanallänge zum Stillstand kommt und erstarrt. Das über die Öffnung der Türlagerbuchse 20 sichtbare, innerhalb der Kanallänge der Teilkanäle 19 erstarrte Wärmeisolationsmaterial 18 ist ein sicheres Indiz für die vollständige Füllung des Innenraumes der Tür 12.

Es versteht sich, daß neben den an der höherliegenden Rahmenleiste 14 angeordneten Teilkanälen 19 auch an der Rahmenleiste 13 identisch ausgeführte Teilkanäle 19 vorgesehen sein können.

Die Anzahl und die Abmessungen der Teilkanäle 19 bestimmt sich sowohl nach Größe und Art des auszuschäumenden Innenraumes, als auch nach der dynamischen Viskosität des in flüssigen Ausgangskomponenten eingebrachten Wärmeisolationsmaterials 18.

Entgegen dem beschriebenen Ausführungsbeispiel können anstatt der Teilkanäle 19 auch einzelne nicht benachbarte Kanäle vorgesehen sein, deren Querschnitte der Summe der Querschnitte der Teilkanäle 19 entsprechen.

Bereits gute Ergebnisse haben sich bei Versuchen hinsichtlich des auf das in die Teilkanäle 19 einströmende Wärmeisolationsmaterials 18 einwirkenden Strömungswiderstandes ergeben, aufgrund dessen die Strömung innerhalb der Kanallänge zum Stillstand kommt, wenn bei Verwendung von Wärmeisolationsmaterial solationsmaterial 18 aus Polyurethanschaum die drei Teilkanäle 19 je mit einem Durchmesser von 1,2 mm und je einer Kanallänge von 12 mm ausgestattet waren.

Anstatt der mit kreisförmigen Querschnitt ausgestatteten Teilkanälen 19 können auch beispielsweise solche mit quadratischem, rechteckförmigem oder dreieckförmigem Querschnitt zum Einsatz kommen.

Die erfindungsgemäße Lösung ist selbstverständlich auch auf ein wärmeisoliertes Gehäuse eines Kühlgerätes übertragbar, dessen Wärmeisolation in Form von flüssigen Ausgangskomponenten eingetragen wird.

## Patentansprüche

1. Wärmeisolierende Wand, insb. aus einzelnen übereinander angeordneten Schichten aufgebaute Wand, deren zur Wärmeisolation beitragende Schicht zwischen außenliegenden, einen Innenraum umschließenden Deckschichten angeordnet und in Form von flüssigen Ausgangskomponenten über eine Öffnung in den Innenraum einbringbar ist, wobei die von der Wärmeisolation verdrängte Luft über wenigstens eine Austrittsöffnung entweichen kann, die mit den Austritt des Wärmeisolationsmaterials verhindernden Mitteln ausgestattet ist, wobei die Luftaustrittsöffnung aus einem Kanal gebildet ist, dessen Kanalverlauf vom auszuschäumenden Raum zum Kanalausgang hin im wesentlichen gleichgerichtet ist und dessen im wesentlichen gleichbleibender Querschnitt gießtechnisch als Luftdurchlaß genügt, und wobei sein Kanalquerschnitt zusammen mit seiner Kanallänge für das durch Druck in den Innenraum eingebrachte und in den Kanal einströmende Wärmeisolationsmaterial (18) einen Strömungswiderstand darstellt, der dem Druck entgegenwirkt, sodaß das strömende Wärmeisolationsmaterial (18) innerhalb der Kanallänge zum Stillstand kommt.

2. Wärmeisolierende Wand nach Anspruch 1, dadurch gekennzeichnet, daß der den Luftdurchlaß erlaubende Querschnitt sich aus einer Mehrzahl von Einzelquerschnitten von strömungstechnisch voneinander getrennten Teilkanälen (19) zusammensetzt.

3. Wärmeisolierende Wand nach Anspruch 2, dadurch gekennzeichnet, daß die Teilkanäle (19) als Durchgangsbohrungen gleichen Querschnitts ausgebildet sind.

4. Wärmeisolierende Wand nach Anspruch 2 oder 3, dadurch gekennzeichnet, daß die Länge der Teilkanäle (19) zumindest das Zehnfache ihres hydraulischen Durchmessers beträgt.

## Claims

1. Thermally insulating wall, especially a wall formed from individual layers arranged one above the other, the layer of which contributing to the thermal insulation is arranged between outwardly disposed covering layers enclosing a cavity and is introducible in the form of liquid starting components by way of an opening into the cavity, wherein the air displaced by the thermal insulation can escape by way of at least one outlet opening, which is equipped with means preventing exit of the thermal insulation material, wherein the air outlet opening is formed by a channel, the channel course of which is substantially unidirected from the foam expansion space to the channel outlet and the substantially constant cross-section of which suffices as an air passage according to casting technique, and wherein its channel cross-section together with its channel length represents, for the thermal insulation material (18) introduced by pressure into the cavity and flowing into the channel, a flow resistance which counteracts the pressure so that the flowing thermal insulation material (18) comes to a standstill within the channel length.

2. Thermally insulating wall according to claim 1, characterised thereby that the cross-section permitting the air passage is composed of a plurality of individual cross-sections of part channels (19) separated from one another in terms of flow engineering.

3. Thermally insulating wall according to claim 2, characterised thereby that the part channels (19) are constructed as through bores of equal cross-section.

4. Thermally insulating wall according to claim 2 or 3, characterised thereby that the length of the part channels (19) amounts to at least tenfold of their hydraulic diameter.

## Revendications

1. Paroi thermiquement isolante, notamment paroi formée de différentes couches superposées, dans laquelle la couche qui contribue à l'isolation est disposée entre deux couches de couverture extérieures délimitant une chambre intérieure et peut être introduite sous forme de composants liquides dans la chambre intérieure par l'intermédiaire d'une ouverture, l'air refoulé par l'isolant thermique pouvant s'échapper par au moins une ouverture de sortie pourvue de moyens pour empêcher la sortie du matériau d'isolation, l'ouverture de sortie d'air étant formée d'un canal dont le tracé, depuis la chambre à remplir de matériau moussé jusqu'à la sortie, suit sensiblement la même direction et dont la section sensiblement constante, sur le plan du moulage, est suffisante en tant que passage d'air, la section du canal combinée à la longueur de celui-ci formant une résistance à l'écoulement pour le matériau d'isolation (18) introduit sous pression dans la chambre intérieure et pénétrant dans le canal, laquelle résistance s'oppose à la pression de telle sorte que le matériau d'isolation thermique (18) s'arrête à l'intérieur du canal.

2. Paroi thermiquement isolante selon la revendication 1, caractérisée par le fait que la section qui permet le passage de l'air est formée de plusieurs sections individuelles de tronçons (19) de canal séparés les uns des autres sur le plan de l'écoulement.

3. Paroi thermiquement isolante selon la revendication 2, caractérisée par le fait que les tronçons (19) de canal sont agencés sous forme de trous débouchants de même section.

4. Paroi thermiquement isolante selon la revendication 2 ou 3, caractérisée par le fait que la longueur des tronçons (19) de canal correspond à au moins dix fois leur diamètre hydraulique.
